# EUROPEAN PATENT APPLICATION

(11) **EP 2 450 609 A1**
(43) Date of publication of application: **09.05.2012**
(21) Application number: 11169355.2
(22) Date of filing: 09.06.2011
(51) Int. Cl.: F16L 33/207, F16L 33/22, F16L 13/14

(54) **Connecting assembly and tubular body provided with the same**

(71) Applicant: Shell Internationale Research Maatschappij B.V., 2596 HR The Hague (NL)
(72) Inventor: Bond, Timothy James Morten, Houston, TX 77066 (US); Ha, Hanh Lap, London EC2V 5DE (GB); Smith, Richard James Anthony, 2288GS Rijswijk (NL)
(74) Representative: Matthezing, Robert Maarten

(57) **Abstract**

The present invention provides a connecting assembly (1) suitable for application as end-connector to a tubular body (2), the assembly (1) comprising a first element (3) and a second element (5), the first element (3) comprising a first ring (4) with a profiled outer surface (4A), the second element (5) comprising a second ring (6) with a profiled inner surface (6A), the second element (5) being able to surround the first element (3), the profiled outer surface (4A) of the first ring (4) being complementary to the inner surface (6A) of the second ring (6), the first ring (4) being expandable..

## Description

The present invention relates to a connecting assembly suitable for application as end-connector to a tubular body, such as a pipe or pipeline, and to a tubular body provided with the same.

In general, it is advantageous to try to minimize the weight of pipelines (per meter), while at the same time maintaining the specifications of the maximum allowable pressure at which the pipeline can be operated. Or, expressed in a different way, it is advantageous to increase the maximum allowable pressure at which the pipeline can be operated, while the weight (per meter) remains the same.

It is known that natural gas and liquid petroleum products may contain undesired contaminants, especially undesired acidic contaminants such as carbon dioxide and hydrogen sulphide. Further, organic acids as well as chlorides may be present. It is also known that under standard operating conditions of pressure and temperature, pipelines formed of conventional materials carrying such contaminated products may be subject to failure, for instance due to stress corrosion cracking. Such failures may result in longitudinally extending fractures of the pipelines.

Previous attempts to reduce the risk of such failures have involved the use of corrosion inhibitors, added to the products being carried by the pipelines. Unfortunately, this may result in unacceptable costs including not only the cost of the corrosion inhibitors and adding them to the products but also the cost of removing and recovering the corrosion inhibitors in due course from the products carried by the pipelines. The use of corrosion inhibitors is also not advisable, particularly in offshore pipelines, due to potential environmental problems created if there is an escape of the corrosion inhibitors from the pipelines.

Alternative ways of reducing the risk of cracking, especially stress corrosion cracking, in pipes by reducing the tensile stress on the part of the pipes in contact with the contaminated products being carried have been proposed. These include the use of pipes formed of, for example, two tubes inserted one inside the other and mechanically forcing the inner pipe into contact with the outer pipe during production so that the inner pipe after completion of this operation has a compressive stress and the outer pipe has a tensile stress. This process is known as "auto-frettage"; an example of such a process has been described in US 4 823 847.

Elongated tubular bodies of a different kind are known from US 4 657 049 in which metal strips are helically wound in overlapping fashion and embedded in an adhesive matrix to produce a rigid tubular structure.

US 3 530 567 describes a method of forming an elongated tubular body (or pipe or pipeline) by helically winding a metal strip in self-overlapping fashion so that the thickness of the wall of the tube at any point is formed from a plurality of laps. In order to remove the helical ridges on the internal bore of the tube formed by the edges of the strip, the laps of the strip material are flattened one against the other after winding by expanding the tubular structure beyond the yield point of the metal strips. Such a procedure presents significant manufacturing difficulties.

In GB 2 280 889 a method is disclosed to form a hollow elongated or tubular body which comprises helically winding at least one strip of material in self-overlapping fashion to provide a multi-layer tubular structure. In this arrangement the strip is longitudinally pre-formed to provide a transverse cross-section having at least one step which, in each convolution the strip accommodates the overlapping portion of the next convolution. A tubular body having a wall thickness formed of a plurality of laps may thus be continuously made from a single strip of material, the wall thickness generally being one strip thickness greater than the number of steps formed in the cross-section of the strip. A similar tubular body is described in WO 2006/016190.

An advantageous way to construct elongated tubular bodies comprises two or more layers of relatively simple preformed metal strips (together forming the outer casing) around a relatively light inner pipe (the inner casing). The layers in the outer casing are glued together, and preferably the outer casing is glued onto the inner casing. The preformed metal strip is a simple flat, prebended strip without any profile. The pre-bending is done under a slight angle with the longitudinal direction of the strip. Thus, the pre-bending results in a helical shape. The preformed metal strips in the finished tubular body are not self overlapping. The inner casing is preferably corrosion resistant. In this way the requirements of the pipeline (corrosion resistance and strength) are, at least partly, separated. The inner casing provides in particular the corrosion resistance, whilst the outer layers provide the major part of the strength (axial as well as radial). The hollow core in the centre of the elongated body is the space for the transport of gas and/or liquids. The process has been described in WO 2008/125682.

In order to construct long pipelines, relatively short segments are produced and connected to each other. In the case of steel segment this is suitably be done by welding. Another possibility is the application of a flange, usually by welding the flange to the steel pipe, followed by connecting flanges of adjacent segments to each other for instance by bolting or clamping.

In the case of the above described tubular bodies, in which strong, stiff tubular bodies are obtained by helically winding of metal strips often around an inner tubular casing, and gluing the elements together, it is not possible to weld tubular bodies together. Due to the high temperatures the glue will decompose, and over a certain length the connection between the elements will disappear, resulting in weakened, leaking spots around the welding zones.

Thus, there is a need for a connection assembly which can be used to connect the above described tubular bodies to each other.

It is an object of the present invention to accommodate the above need.

It is a further object of the present invention to provide an alternative connecting assembly, in particular for application as end-connector to a helically wound tubular body in which one or more bended metal strips and optionally an inner casing are glued together.

One or more of the above or other objects are achieved according to the present invention by providing a connecting assembly suitable for application as end-connector to a tubular body, the assembly comprising a first element and a second element, the first element comprising a first ring with a profiled outer surface, the second element comprising a second ring with a profiled inner surface, the second element being able to surround the first element, the profiled outer surface of the first ring being complementary to the inner surface of the second ring, the first ring being expandable.

By inserting a tubular body between the first and second elements and expanding the first ring of the first element a very tight connection is obtained. Expansion of the first ring will also result in expansion of the tubular body, resulting in an internal passageway which is about the same as the original internal passageway of the tubular body. Thus, there will be no substantial flow restriction caused by the applied connecting assembly. By using connecting assemblies having dedicated attachment members, such as welding rings or flanges, it is now possible to quickly connect tubular bodies to each other. When a tubular inner casing is present, the tubular inner casing will remain intact and there is no possibility that the fluid which flows through the tubular body comes in contact with glue as used for forming the tubular body, thus no dissolving or degradation of the glue will occur.

The person skilled in the art will readily understand that the first and second elements may be made from various materials; preferably they are made from metal, especially steel, copper, aluminium, stainless steel, etc.

In a preferred embodiment according to the present invention the first element is provided with an attachment member. The person skilled in the art will readily understand that the attachment member may have various forms; preferably, the attachment member is a welding ring (sometimes referred to with "welding neck") or a flange.

In another preferred embodiment according to the present invention the second element is provided with an attachment member. Again, the attachment member may have various forms; preferably, the attachment member is a welding ring or a flange.

In an especially preferred embodiment of the assembly according to the present invention, the assembly is suitable for application as end-connector to a helically wound tubular body in which one or more bended metal strips and optionally an inner casing are glued to each other. Such a helically wound tubular body has been described in WO 2008/125682, the teaching of which is hereby incorporated by reference.

Further it is preferred that the profiles of the first element and the second element are cylindrical profiles. The cylindrical profiles may take various forms such as dental profiles, ribbed profiles, sinusoidal profiles, and are preferably sinusoidal profiles. Also it is preferred that the cylindrical profiles have a progressive profile to the end of the tubular body to which the assembly is to be attached. Preferably the profile is a helical profile.

In a further aspect the present invention provides a tubular body provided with an assembly according to the present invention. In this way, the first ring functions as an inner ring and the second ring as an outer ring, whilst an end of the tubular body is sandwiched between them. Preferably, in the tubular body provided with the assembly, the first ring has been expanded.

In an even further aspect, the present invention provides a process to apply an assembly according to the present invention to a tubular body, the process comprising at least the steps of:
- inserting the first ring into the tubular body;
- arranging the second ring around the tubular body, the profiled outer surface of the first ring being complementary to the inner surface of the second ring; and
- expanding the first ring.

The expanding can be obtained in various ways. In one preferred embodiment, the expanding is carried out by pushing a (preferably smooth) tapered insert having a diameter larger than the diameter of the first ring through the first ring; by inserting such a tapered insert, the first ring will be gradually expanded. In another embodiment, the expanding is carried out by expanding a multi-component cylinder inside the first ring. Such a cylinder may for example comprise parallel arranged finger-like organs that can be expanded radially.

Hereinafter the invention will be further illustrated by the following non-limiting drawing. Herein shows:
Fig. 1 schematically a cross-sectional view of an assembly according to the present invention;
Fig. 2 schematically a cross-sectional view of a tubular body in the process of being provided with an assembly according to the present invention; and
Fig. 3 schematically a cross-sectional view of a tubular body provided with an assembly according to the present invention.

For the purpose of this description, same reference numbers refer to similar components.

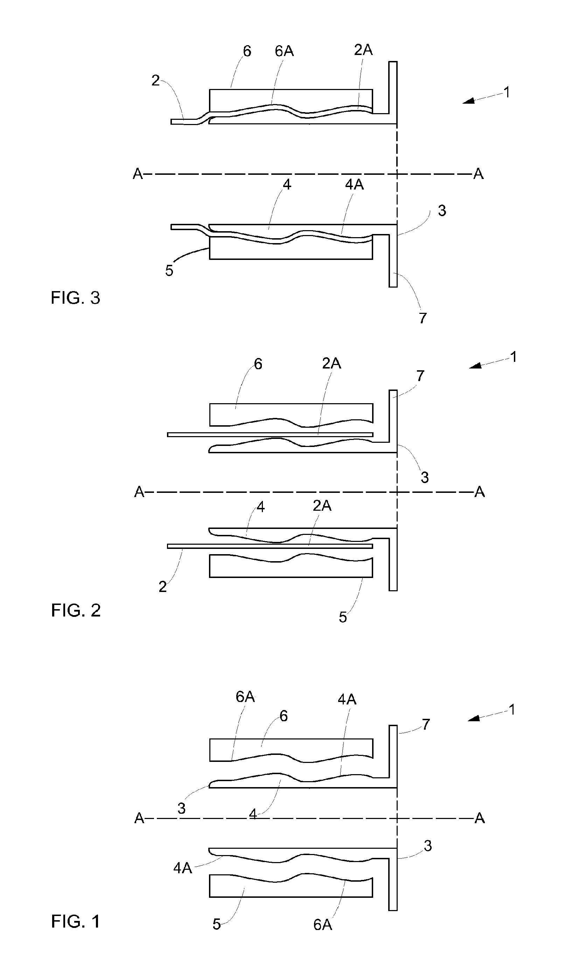

Figure 1 schematically shows a cross-sectional view of an assembly 1 according to the present invention. The assembly 1 comprises a first element 3 and a second element 5. The first element 3 has a first ring 4 with a profiled outer surface 4A and the second element 5 has a second ring 6 with a profiled inner surface 6A; the second element 5 can at least partially surround the first element 3. Further, the profiled outer surface 4A of the first ring 4 is complementary to the inner surface 6A of the second ring 6. The profiles 4A,6A of the first element 3 and the second element 5 are both cylindrical and axial profiles.

In the embodiment of Figure 1, the first element 3 is provided with an attachment member 7, in the form of a welding ring or a flange. Alternatively, the second element 5 may be provided with such an attachment member (not shown).

Figure 2 shows a tubular body 2 (having a longitudinal axis A-A) in the process of being provided with the assembly 1 as shown in Figure 1. To this end, the first ring 4 has been inserted into the tubular body 2 and the second ring 6 has been arranged around the tubular body 2, the profiled outer surface 4A of the first ring 4 being complementary to the inner surface 6A of the second ring 6. The end 2A of the tubular body is placed between the first ring 4 and the second ring 6. Preferably, the tubular body 2 is a helically wound tubular body in which one or more bended metal strips and optionally an inner casing (not shown) are glued to each other.

As can be seen from Figure 2, the cylindrical profiles 4A,6A have a progressive profile to the end 2A of the tubular body 2 to which the assembly 1 is to be attached.

The assembly 1 can be applied to the tubular body 2 by expansion of the first ring 4 of the assembly 1, for example by inserting a tapered insert (not shown) having a diameter larger than the diameter of the first ring 4 into the first ring 4. Alternatively, the expansion may be carried out by expanding a multi-component cylinder (not shown) inside the first ring 4. Such a multi-component cylinder may comprises parallel arranged finger-like organs that can be expanded radially.

Fig. 3 schematically shows a cross-sectional view of a tubular body provided with the assembly 1, after expansion has taken place. The first ring 4 functions as an inner ring and the second ring 6 as an outer ring, whilst the end 2A of the tubular body 2 is sandwiched between them. Preferably, and as shown in Fig. 3, the expansion of the first ring 4 has also resulted in expansion of the end 2A of the tubular body 2, resulting in an internal passageway which is about the same as the original internal passageway of the tubular body 2. Thus, there will be no substantial flow restriction in the tubular body 2 caused by the applied assembly 1.

The person skilled in the art will readily understand that many modifications may be made without departing from the scope of the invention.

## Claims

1. A connecting assembly (1) suitable for application as end-connector to a tubular body (2), the assembly (1) comprising a first element (3) and a second element (5), the first element (3) comprising a first ring (4) with a profiled outer surface (4A), the second element (5) comprising a second ring (6) with a profiled inner surface (6A), the second element (5) being able to surround the first element (3), the profiled outer surface (4A) of the first ring (4) being complementary to the inner surface (6A) of the second ring (6), the first ring (4) being expandable.

2. The assembly (1) according to claim 1, wherein the first element (3) is provided with an attachment member (7) .

3. The assembly (1) according to claim 2, wherein the attachment member (7) is a welding ring or a flange.

4. The assembly (1) according to claim 1, wherein the second element (5) is provided with an attachment member.

5. The assembly (1) according to claim 4, wherein the attachment member is a welding ring or a flange.

6. The assembly (1) according to any of claims 1 to 5, wherein the assembly (1) is suitable for application as end-connector to a helically wound tubular body in which one or more bended metal strips and optionally an inner casing are glued to each other.

7. The assembly (1) according to any of claims 1 to 6, wherein the profiles (4A,6A) of the first element (3) and the second element (5) are cylindrical profiles.

8. The assembly (1) according to claim 7, wherein the cylindrical profiles have a progressive profile to the end (2A) of the tubular body (2) to which the assembly (1) is to be attached.

9. Tubular body (2) provided with an assembly (1) according to any of claims 1 to 8.

10. Tubular body (2) according to claim 9, wherein the first ring (4) has been expanded.

11. A process to apply an assembly (1) according to any of claims 1 to 9 to a tubular body (2), comprising at least the steps of:
- inserting the first ring (4) into the tubular body (2);
- arranging the second ring (6) around the tubular body (2), the profiled outer surface (4A) of the first ring (4) being complementary to the inner surface (6A) of the second ring (6); and
- expanding the first ring (4).

12. A process according to claim 11, wherein the expanding is carried out by pushing a tapered insert having a diameter larger than the diameter of the first ring (4) through the first ring (4).
